# EUROPEAN PATENT SPECIFICATION

(11) **EP 2 942 378 B1**
(45) Date of publication and mention of the grant of the patent: **24.08.2016**
(21) Application number: 14461527.5
(22) Date of filing: 07.05.2014
(51) Int. Cl.: C09D 11/32, B41M 3/14, C09D 11/38

(54) **Infrared-absorbing inkjet ink composition for security document personalization**
Infrarotabsorbierende Tintenstrahltintenzusammensetzung zur Sicherheitsdokumentpersonalisierung
Composition d'encre pour jet d'encre absorbant les infrarouges pour la personnalisation de documents de sécurité

(43) Date of publication of application: 11.11.2015
(73) Proprietor: Polska Wytwornia Papierow Wartosciowych S.A., 00-222 Warszawa (PL)
(72) Inventor: Karpinski, Arkadiusz, 00-222 Warszawa (PL); Wojcik, Pawel, 00-222 Warszawa (PL); Biernacki, Ariel, 00-222 Warszawa (PL); Kowalska, Wieslawa, 00-222 Warszawa (PL); Ziolkowski, Slawomir, 00-222 Warszawa (PL); Kot, Marta, 00-222 Warszawa (PL); Olszynska, Agata, 00-222 Warszawa (PL); Leszczynska-Ambroziewicz, Ewa, 00-222 Warszawa (PL)
(74) Representative: Eupatent.pl

(56) References cited:
- EP-A1- 2 463 110
- WO-A1-2012/069518

## Description

The invention relates to an infrared-absorbing inkjet ink composition. It is particularly useful for applying personalized security images on plastic substrates of documents such as identity documents, tickets, credit cards, security foils and the like, which can be easily read using an optical character recognition device such as currency acceptors, ticket validators, hand-held authentication devices, etc.

Inkjet printing is a well known technique by which printing is accomplished without contact between the printing device and the substrate on which the printed image is deposited. This technique is particularly dedicated for application of images onto irregularly shaped surfaces, such as plastic, glass or metals containers.

An inkjet ink composition should meet certain requirements to be useful in inkjet printing operations. The requirements involve thermal resistivity, surface tension and viscosity of the ink, as well as solubility and compatibility of the ink components. Further, the ink should dry quickly and should easily pass through the ink nozzle. In addition, solvent composition must be adopted to each type of substrate in order to provide proper substrate wetting and adhesion. In the case of plastic substrates the solvent mixture need to cause polymer swelling to promote the adhesion. Moreover, the printed information should resist abrasion and common solvents. Furthermore, water fastness is highly desired for security printing of important documents to prevent alternation of printed information.

There are known spectrally selective, non-visible infrared radiation (IR) absorbing inks, and in particular near infrared (NIR) absorbing inks.

US2013/0234427 describes a printing ink formulation with metal dithiolene complex with aryl or heteroarylsubstituted imidazoline-2-chalcogenone-4,5-dithiolene ligands as IR colorless absorbers with minimal absorption in the VIS spectrum (form 400 to 700 nm). The ink is applicable for paper banknotes security marking because of its good thermal stability without loosing a colorlessness. The ink mixture may by applied by using techniques of flexographic printing, screen printing intaligo printing, offset printing, inkjet printing, laser printing or letterpress printing. Nevertheless, the ink composition has to be adjusted for each of said printing techniques and substrates independently. Finally, the mentioned document is not describing any particular example of ink-jet ink composition.

US5024923 describes an infrared absorbent composition with metal dithiolene complex and organic base material having absorption maximum in the wavelength region of from 300 to 2000 nm. The composition is applied for improving the light fastness of a photographic film unit.

EP0822237 describes an inkjet ink composition consisting of liquid vehicle, a dye, a hydroxyalkylated polyethyleneimine, and an ammonium salt for enhancement of waterfastness with improved IR scannability which can be used to produce water resistant bar codes.

There exist a need for an inkjet ink composition for security printing on plastic substrates with improved thermal resistivity and performance characteristic, which has a reduced visibility in the visible light and which exhibits absorption in the near infrared (NIR) region.

According to the invention there is provided an inkjet ink composition comprising a near infrared (NIR) absorber in amount of from 0,05% to 5% w/w, a non-aqueous organic solvent system and a binder component in amount of from 0,1% to 5% w/w. The NIR absorbent is selected from the group consisting of metal dithiolene complexes (such as nickel, platinum and palladium complexes), cyanines, and phthalocyanines. The non-aqueous organic solvent system comprises gamma-butyrolactone in amount of from 1% to 30% w/w and 2-butoxyethyl acetate in amount of from 50% to 95% w/w. Vinylchloride-vinylacetate copolymer is selected as a binder. In order to modulate some of ink factors, such as viscosity, surface tension and the speed of ink drying, the composition may further contain at least one solvent selected from the group consisting of 1-methoxy-2-propanol acetate, diethylene glycol diethyl ether and 2-butoxyethanol in amount of from 0,1% to 30% w/w. The NIR absorbent can be a dye or a pigment.

It was surprisingly found that elements printed with the presented ink composition on the structure of polycarbonate, vinyl polymers or polyester card, are highly resistant to accelerated ageing tests which are dedicated for documents. Experiments have proven light stability of printed image and data for 10 years of usage.

Examples of dyes which may be used as the NIR absorbers in the above-mentioned composition include:
- Metal dithiolene complexes such as tetrabutylammonium bis(3,6-dichloro-1,2-benzene-dithiolato)nickelate and tetrabutylammonium bis(3,4,6-trichioro-1,2-benzene-dithioiato)nickelate,
- cyanines such as: 2-[2-[2-chloro-3-[2-(1,3-dihydro-3,3-dimethyl-1-ethyl-2H-benz[e]indol-2-ylidene)ethylidene]-1-cylohexen-1-yl]-ethenyl]-3,3-dimethyl-1-ethyl-1 H-benz[e]indolium iodide,
- phthalocyanines such as copper(II) 5,9,14,18,23,27,32,36-octabutoxy-2,3-naphthalocyanine.

Examples of pigments which may be used as the NIR absorbers in the above-mentioned composition include:
- Metal dithiolene complexes such as bis(4,4'-dimethoxydithiobenzyl) nickel
- cyanines such as: pigment of code: FHI 8192 commercially available from Fabricolor Holding Int'l LLC
- phthalocyanines such as tin(IV) 2,3-naphthalocyanine dichloride

The use of at least one pigment as a NIR absorber requires presence of at least one dispersant in amount of from 0,05 to 5 w/w in order to disperse the pigment or pigments mixture. Examples of dispersants which may be used in the above-mentioned composition include: acrylate copolymers with pigment-affinic groups; alkylammonium salts of a high molecular-weight polymer, comb-type copolymers with pigment affinic groups and synergists, which are pigment derivatives.

A dye inkjet ink composition can be produced by a method comprising the steps of:
- providing a vinylchloride-vinylacetate copolymer;
- dissolving the vinylchloride-vinylacetate copolymer into gamma-butyrolactone by mixing the mixture in room temperature;
- adding to the mixture 2-butoxyethyl acetate and a dye NIR absorber;
- mixing the composition for about 2 hours in room temperature; and
- filtering the composition on a filter of porosity of about 0,45 µm.

A pigment inkjet ink composition can be produced by a method comprising the steps of:
- providing a pigment NIR absorber in the form of 5%-20% w/w solution;
- milling the pigment NIR absorber solution with a mixture of gamma-butyrolactone, 2-butoxyethyl acetate, vinylchloride-vinylacetate copolymer and dispersants (structured acrylate copolymer with pigment-affinic groups) to obtain the pigment grain size of less than 150nm;
- diluting the resulting composition with: 2-butoxyethyl acetate and gamma-butyrolactone to obtain a mixture concentration of from 0,1 to 5 w/w; and
- filtering the composition on a filter of porosity 10 µm and 1 µm.

The following examples present various possible inkjet ink compositions:

### Example I

| Component | %w/w |
|---|---|
| Tetrabutylammonium bis(3,6-dichloro-1,2-benzene-dithiolato)nickelate | 0,7 |
| gamma-butyrolactone | 20 |
| 2-butoxyethyl acetate | 78,6 |
| vinylchloride-vinylacetate copolymer | 0,7 |

The composition is characterized by adequate solubility of the NIR absorber and resin, which prevents precipitation of solid components at the nozzle of the printing head.

### Example II

| Component | %w/w |
|---|---|
| tetrabutylammonium bis(3,6-dichloro-1,2-benzene-dithiolato)nickelate | 0,7 |
| gamma-butyrolactone | 10 |
| 2-butoxyethyl acetate | 88,6 |
| vinylchloride-vinylacetate copolymer | 0,7 |

This composition has the advantage of a lower penetration of ink into the substrate as compared to the composition of Example 1.

### Example III

| Component | %w/w |
|---|---|
| Tetrabutylammonium bis(3,4,6-trichloro-1,2-benzene-dithiolato) nickelate | 0,7 |
| gamma-butyrolactone | 20 |
| 2-butoxyethyl acetate | 47,3 |
| vinylchloride-vinylacetate copolymer | 2,0 |
| 1-methoxy-2-propanol acetate | 30 |

The advantage of this composition is an adequate solubility of the NIR absorber and the resin, as well as quick drying on the substrate.

### Example IV

| Component | %w/w |
|---|---|
| 2-[2-[2-chloro-3-[2-(1,3-dihydro-3,3-dimethyl-1-ethyl-2H-benz[e]indol-2-ylidene)ethylidene]-1-cylohexen-1-yl]-ethenyl]-3,3-dimethyl-1-ethyl-1 H-benz[e]indolium iodide | 0,15 |
| gamma-butyrolactone | 20 |
| 2-butoxyethyl acetate | 78,05 |
| vinylchloride-vinylacetate copolymer | 1,8 |

This composition is designed for a component from the cyanide group.

The ink compositions formulated as described above were applied into a polycarbonate substrate in an inkjet printing process, to test their thermal stability and colorlessness after the thermal treatment during lamination process of polycarbonate documents. The printed image achieved by the infrared absorbing ink exhibits good thermal stability and no cracking was observed after lamination process. As prepared document contains the infrared image inside the multilayered structure of the plastic card. After thermal testing, the ink was sill invisible for a human eye and showed absorption maximum in the wavelength region of from 700 to 950 nm.

The ingredients in the examples above are commercially available. The ink composition according to the invention has the advantage of good performance characteristic and thermal stability. The ink composition comprising a non-aqueous, organic solvent system is dedicated to the inkjet printing process for forming security images on different type of plastic substrates, wherein the printed images are invisible for a naked eye and have absorption maximum in the near infrared (NIR) region.

The presented inkjet inks may be used to make level 3 security elements (i.e. elements which can be verified by experts using special equipment). It can be used e.g. to print security timestamps or to print personalized data (unique data or data which are also printed using other techniques).

## Claims

1. An inkjet ink composition comprising:
- at least one near infrared (NIR) absorbent selected from the group consisting of: metal dithiolene complexes, cyanines, and phthalocyanines in amount of from 0,05% to 5% w/w;
- gamma-butyrolactone as a solvent in amount of from 1 % to 30% w/w;
- 2-butoxyethyl acetate as a solvent in amount of from 50% to 95% w/w; and
- vinylchloride-vinylacetate copolymer as a binder in amount of from 0,1% to 5% w/w.

2. The inkjet ink composition according to claim 1, wherein said NIR absorbent is a dye.

3. The inkjet ink composition according to claim 2, wherein said dye is at least one compound selected from the group consisting of: tetrabutylammonium bis(3,6-dichloro-1,2-benzene-dithiolato)nickelate, tetrabutylammonium bis(3,4,6-trichloro-1,2-benzene-dithiolato)nickelate, 2-[2-[2-chloro-3-[2-(1,3-dihydro-3,3-dimethyl-1-ethyl-2H-benz[e]indol-2-ylidene)ethylidene]-1-cylohexen-1-yl]-ethenyl]-3,3-dimethyl-1-ethyl-1 H-benz[e]indolium iodide and copper(II) 5,9,14,18,23,27,32,36-octabutoxy-2,3-naphthalocyanine.

4. The inkjet ink composition according to any of the preceding claims wherein the composition further comprises at least one dispersant selected form the group consisting of: acrylate copolymers with pigment-affinic groups ; alkylammonium salts of a high molecular-weight polymer, comb-type copolymers with pigment affinic groups and synergists in amount of from 0,05 to 5 w/w.

5. The inkjet ink composition according to claim 4 wherein said NIR absorbent is a pigment.

6. The inkjet ink composition according to the claim 5 wherein said pigment is at least one compound selected from the group consisting of: bis(4,4'-dimethoxydithiobenzyl) nickel and tin(IV) 2,3-naphthalocyanine dichloride.

7. The inkjet ink composition according to any of the preceding claims wherein the composition further comprises at least one solvent selected from the group consisting of: 1-methoxy-2-propanol acetate, diethylene glycol diethyl ether and 2-butoxyethanol in amount of from 0,1% to 30% w/w.

8. A plastic substrate comprising printed matter applied by inkjet technology using the inkjet ink according to any of claims 1-7.

9. The plastic substrate according to claim 8, wherein the printed matter is not visible to the naked human eye and is visible in the infrared region.

10. The plastic substrate according to any of claims 8-9, wherein the substrate is made of polycarbonate, polyvinyl chloride or polyester.

11. A security document comprising a plastic substrate according to any of claims 8-10, wherein the printed matter comprises a timestamp or another personalized data.

## Patentansprüche

1. Tintenstrahltintenzusammensetzung, umfassend:
- mindestens ein Nahinfrarot-(NIR)-Absorbens, das aus der Gruppe ausgewählt ist, die aus Folgendem besteht: Metalldithiolenkomplexen, Cyaninen und Phthalocyaninen in der Menge von 0,05 % bis 5 % w/w;
- Gamma-Butyrolacton als Lösungsmittel in der Menge von 1 % bis 30 % w/w;
- 2-Butoxyethylacetat als Lösungsmittel in der Menge von 50 % bis 95 % w/w; und
- Vinylchlorid-Vinylacetat-Copolymer als Bindemittel in der Menge von 0,1 % bis 5 % w/w.

2. Tintenstrahltintenzusammensetzung nach Anspruch 1, wobei das NIR-Absorbens ein Farbstoff ist.

3. Tintenstrahltintenzusammensetzung nach Anspruch 2, wobei der Farbstoff mindestens eine Verbindung ist, die aus der Gruppe ausgewählt ist, die aus Folgendem besteht:
Tetrabutylammonium-bis(3,6-dichlor-1,2-benzol-dithiolato)nickelat,
Tetrabutylammonium-bis(3,4,6-trichlor-1,2-benzol-dithiolato)nickelat,
2-[2-[2-Chlor-3-[2-(1,3-dihydro-3,3-dimethyl-1-ethyl-2H-benz[e]indol-2-yliden)ethyliden]-1-cyl ohexen-1-yl]-ethenyl]-3,3-dimetyl-1-ethyl-1H-benz[e]indolium-iodid und Kupfer(II) 5,9,14,18,23,27,32,36-octabutoxy-2,3-naphthalocyanin.

4. Tintenstrahltintenzusammensetzung nach einem der vorhergehenden Ansprüche, wobei die Zusammensetzung weiter mindestens ein Dispergiermittel umfasst, das aus der Gruppe ausgewählt ist, die aus Folgendem besteht: Acrylat-Copolymeren mit pigmentaffinen Gruppen; Alkylammoniumsalzen eines Polymers mit hohem Molekulargewicht, kammartigen Copolymeren mit pigmentaffinen Gruppen und Synergisten in der Menge von 0,05% bis 5% w/w.

5. Tintenstrahltintenzusammensetzung nach Anspruch 4, wobei das NIR-Absorbens ein Pigment ist.

6. Tintenstrahltintenzusammensetzung nach Anspruch 5, wobei das Pigment mindestens eine Verbindung ist, die aus der Gruppe ausgewählt ist, die aus Folgendem besteht:
bis(4,4'-Dimethoxydithiobenzyl)nickel und Zinn(IV)2,3-naphthalocyanindichlorid.

7. Tintenstrahltintenzusammensetzung nach einem der vorhergehenden Ansprüche, wobei die Zusammensetzung weiter mindestens ein Lösungsmittel umfasst, das aus der Gruppe ausgewählt ist, die aus Folgendem besteht: 1-Methoxy-2-propanolacetat, Diethylenglycoldiethylether und 2-Butoxyethanol in der Menge von 0,1 % bis 30 % w/w.

8. Kunststoffsubstrat, umfassend durch Tintenstrahltechnologie aufgetragene gedruckte Materie unter Verwendung der Tintenstrahltinte gemäß einem der Ansprüche 1-7.

9. Kunststoffsubstrat nach Anspruch 8, wobei die gedruckte Materie für das bloße menschliche Auge nicht sichtbar ist und im Infrarotbereich sichtbar ist.

10. Kunststoffsubstrat nach einem der Ansprüche 8-9, wobei das Substrat aus Polycarbonat, Polyvinylchlorid oder Polyester hergestellt ist.

11. Sicherheitsdokument, umfassend ein Kunststoffsubstrat nach einem der Ansprüche 8-10, wobei die gedruckte Materie einen Zeitstempel oder andere personalisierte Daten umfasst.

## Revendications

1. Composition d'encre pour jet d'encre comprenant :
- au moins un absorbant dans le proche infrarouge (NIR) choisi dans le groupe constitué par : les complexes de dithiolène métalliques, les cyanines et les phtalocyanines en une quantité allant de 0,05 % à 5 % en p/p ;
- la gamma-butyrolactone en tant que solvant en une quantité allant de 1 % à 30 % en p/p ;
- l'acétate de 2-butoxyéthyle en tant que solvant en une quantité de 50 % à 95 % en p/p ; et
- le copolymère chlorure de vinyle-acétate de vinyle en tant que liant en une quantité allant de 0,1 % à 5 % en p/p.

2. Composition d'encre pour jet d'encre selon la revendication 1, ledit absorbant dans le NIR étant un colorant.

3. Composition d'encre pour jet d'encre selon la revendication 2, ledit colorant étant au moins un composé choisi dans le groupe constitué par : le bis(3,6-dichloro-1,2-benzène-dithiolato)nickélate de tétrabutylammonium, le bis(3,4,6-trichloro-1,2-benzène-dithiolato)nickélate de tétrabutylammonium, l'iodure de 2-[2-[2-chloro-3-[2-(1,3-dihydro-3,3-diméthyl-1-éthyl-2H-benz[e]indol-2-ylidène)éthylidène]-1-cylohexén-1-yl]-éthényl]-3,3-diméthyl-1-éthyl-1H-benz[e]indolium et la 5,9,14,18,23,27,32,36-octabutoxy-2,3-naphthalocyanine de cuivre (II).

4. Composition d'encre pour jet d'encre selon l'une quelconque des revendications précédentes, ladite composition comprenant en outre au moins un dispersant choisi dans le groupe constitué par : les copolymères d'acrylate avec des groupes à affinité pigmentaire ; les sels d'alkylammonium d'un polymère de poids moléculaire élevé, des copolymères à structure en peigne avec des groupes à affinité pigmentaire et les synergistes en une quantité allant de 0,05 % à 5 % en p/p.

5. Composition d'encre pour jet d'encre selon la revendication 4, ledit absorbant dans le NIR étant un pigment.

6. Composition d'encre pour jet d'encre selon la revendication 5, ledit pigment étant au moins un composé choisi dans le groupe constitué par : le bis(4,4'-diméthoxydithiobenzyl)nickel et le dichlorure de 2,3-naphthalocyanine d'étain (IV).

7. Composition d'encre pour jet d'encre selon l'une quelconque des revendications précédentes, ladite composition comprenant en outre au moins un solvant choisi dans le groupe constitué par : l'acétate de 1-méthoxy-2-propanol, l'éther diéthylique de diéthylène glycol et le 2-butoxyéthanol en une quantité allant de 0,1 % à 30 % en p/p.

8. Substrat plastique comprenant une matière imprimée appliqué par une technologie à jet d'encre au moyen de l'encre pour jet d'encre selon l'une quelconque des revendications 1 à 7.

9. Substrat plastique selon la revendication 8, ladite matière imprimée n'étant pas visible à l'oeil nu humain et étant visible dans la zone infrarouge.

10. Substrat plastique selon l'une quelconque des revendications 8 à 9, ledit substrat étant constitué de polycarbonate, de chlorure de polyvinyle ou de polyester.

11. Document de sécurité comprenant un substrat plastique selon l'une quelconque des revendications 8 à 10, ladite matière imprimée comprenant un horodatage ou d'autres données personnalisées.
